# EUROPEAN PATENT SPECIFICATION

(11) **EP 0 962 345 B1**
(45) Date of publication and mention of the grant of the patent: **02.01.2002**
(21) Application number: 99830244.2
(22) Date of filing: 23.04.1999
(51) Int. Cl.: B60H 1/32, F25B 39/04

(54) **A condenser for an air conditioning system for a vehicle, having an integral accumulator/expansion tank**
Kondensator für eine Klimaanlage eines Fahrzeuges, mit integriertem Speicher/Expansionstank
Condenseur pour système de conditionnement d'air pour un véhicule, avec accumulateur/réservoir d'expansion intégré

(30) Priority: 05.06.1998 IT TO980489
(43) Date of publication of application: 08.12.1999
(73) Proprietor: MAGNETI MARELLI CLIMATIZZAZIONE S.p.A., 10046 Poirino (Torino) (IT)
(72) Inventor: Parrino, Maurizio, Magneti Marelli Climat. S.p.A., 10046 Poirino, Torino (IT)
(74) Representative: Marchitelli, Mauro

(56) References cited:
- EP-A- 0 480 330
- EP-B- 0 668 986
- US-A- 2 158 388
- US-A- 5 146 767
- US-A- 5 172 758
- US-A- 5 394 710
- US-A- 5 505 253

## Description

The present invention relates to a condenser for an air conditioning system for a vehicle, comprising:
- a rectangularly shaped heat exchanger core with tubes and fins,
- a pair of distributors parallel to each other and placed on two opposite sides of the heat exchanger core, and
- an accumulator/expansion tank integrally formed with one of said distributors and placed in fluid communication therewith.

An air conditioning system for vehicles is - essentially formed by a closed circuit in which are inserted, in series to each other, a compressor, a condenser, an expansion valve and a cooler. In the circuit are normally inserted a dehydrating device and an accumulator which has the purpose of compensating leakages of cooling fluid, filling tolerances and variations of thermal load. In conventional solutions, both the function of accumulator and dehydrating device are concentrated in a single separate component formed by a sealed body having a capacity sufficient to carry out the function of accumulator and housing a filter and a certain quantity of dehydrating material.

Recently, solutions have been presented in which the accumulator of the air conditioning system is integrated in the condenser. Examples of these solutions are disclosed in EP-0668986 and EP-0480330. These two documents disclose a condenser in which one of the distributor is arranged for establishing fluid communication with an auxiliary tubular element which extends parallel to the distributor and which, in use, performs the function of an accumulator. Since the accumulator must have a predetermined minimum capacity which depends on the characteristics of the system, the auxiliary tubular element necessarily involves an increase in the dimensions of the condenser.

Normally, the condenser is mounted on the vehicle with the distributors oriented vertically, in correspondence with the front end of the vehicle engine compartment. With this arrangement, the horizontal dimension of the condenser is a critical factor which is conditioned by the front curvature of the vehicle.

The applicant's experience has shown that when the accumulator is arranged parallel to one of the distributors, the installation of the condenser on many types of vehicles becomes very difficult due to the increase of the horizontal dimension of the condenser.

US-A-5172758 discloses in the embodiment of figure 12 a condenser having the features of the preamble of claim 1. In this prior art solution, the accumulator/expansion tank of the system extends orthogonally to the two distributors, along one of the sides of the heat exchanger core.

The subject of the present invention is a condenser according to claim 1.

Characteristics and advantages of the condenser according to the invention will become clear in the course of the detailed description which follows, given purely by way of non-limiting example, with reference to the annexed drawings, in which:
- figure 1 is a schematic view showing an air conditioning system for vehicles provided with a condenser according to the invention,
- figure 2 is a schematic front elevational view of a condenser according to the invention,
- figures 3 to 6 are schematic views showing preferred embodiments of the condenser, and
- figures 7 and 8 are schematic views showing two condensers according to the invention.

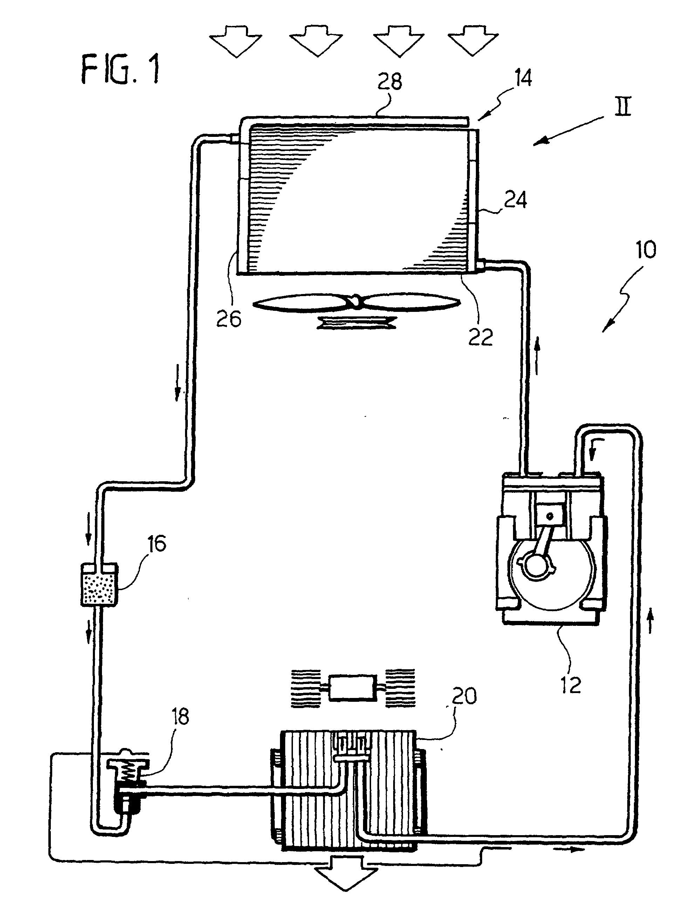

Referring to figure 1, an air conditioning system for vehicles is indicated 10 and comprises a closed circuit in which are arranged in series to each other a compressor 12, a condenser 14 a dehydrating device 16 including a filter, an expansion valve 18 and a cooler 20. The condenser 14 comprises a heat exchanger core 22 formed, in a way per se known, by a plurality of tubes and fins forming a generically a rectangularly shaped structure. The condenser 14 comprises a pair of distributors 24, 26 formed by tubular elements connected to the tubes of the heat exchanger core 22 so as to establish fluid communication therewith. The two distributors 24, 26 are parallel to each other and are arranged along two opposite sides of the heat exchanger core 22.

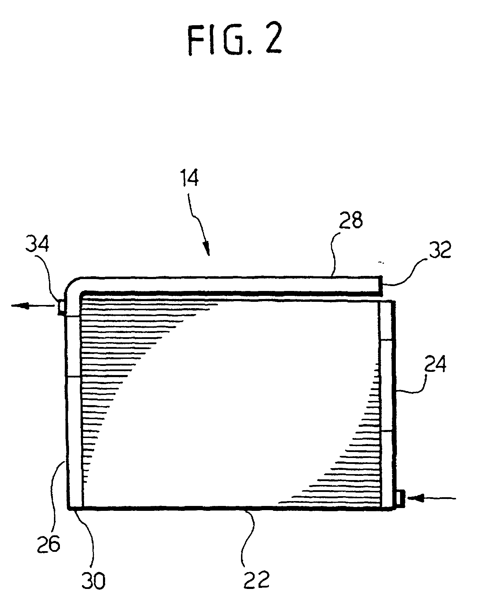

Referring to figures 2 to 6, the condenser 14 is provided with an integral accumulator expansion tank 28 formed by a tubular element extending along one of the sides of the heat exchanger core 22 orthogonal to the distributors 24, 26.

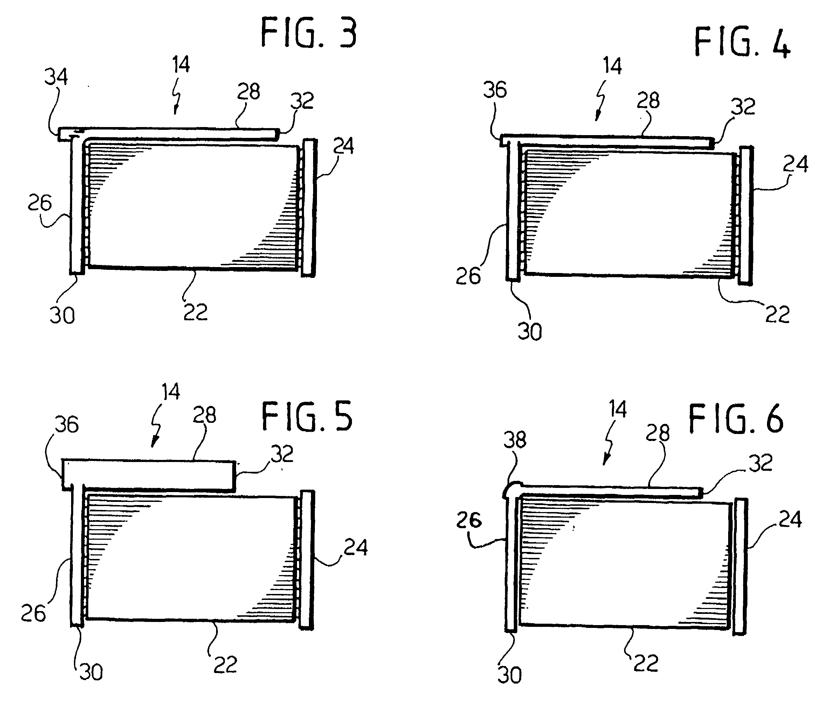

In accordance with figure 2, the distributor 26 and the accumulator 28 are formed by a single tubular element bent approximately at 90° and closed at both ends indicated 30 and 32. A fitting for the fluid outlet, schematically indicated 34, can be applied e.g. by welding on the outer wall of the distributor 26 (figure 2) or in correspondence with the curve connecting the distributor 26 to the accumulator 28 (figure 3).

In alternative, as shown in figure 4, the distributor 26 and the accumulator 28 could be formed by two different tubular elements welded to each other. The tubular element forming the accumulator 28 is closed at both ends 32, 36 whereas the tubular element forming the distributor 26 is closed at the lower end 30 and the open upper end is inserted into a hole formed in the lateral wall of the tubular element 28.

Figure 5 shows a solution similar to the one of figure 4, in which the tubular element forming the accumulator 28 has a diameter greater than that of the distributor 26 and a shorter length.

Finally, as a further preferred, alternative, in figure 6 is shown the case in which the distributor 26 and the accumulator 28 are formed by two different tubular elements connected to each other by a coupling element 38 fixed (for example by welding) to the open ends of the distributor 26 and accumulator 28 so as to form a liquid-tight connection. The ends 30, 32 of the distributor 26, and accumulator 28 are closed.

The shape and the dimensions of the accumulator 28 can be chosen so as to provide a total volume suitable for the characteristics of the system, which generally must be greater than about 100 cm².

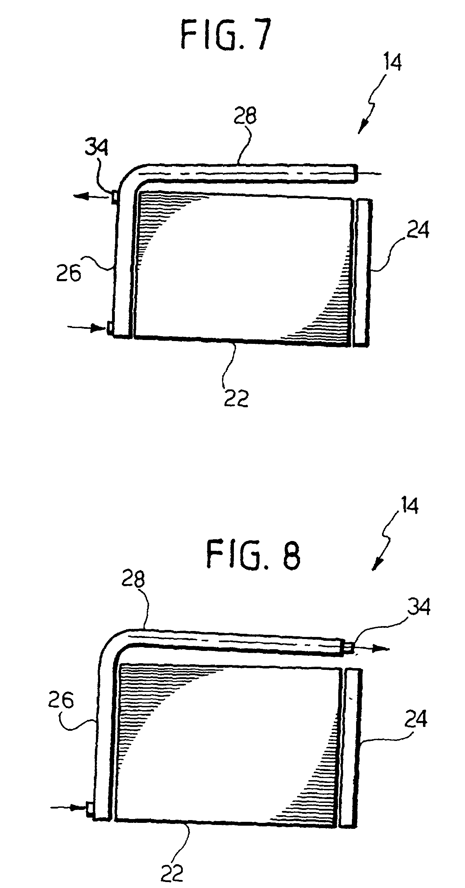

According to the invention, the tubular element forming the accumulator 28 should have a slight inclination with respect to a horizontal direction and the outlet fitting of the condenser should be placed in correspondence with the lower point of the accumulator 28. In this way, the outlet fitting 34 of the condenser will always be in communication with the zone of the accumulator in which the liquid is collected, whereas the vapour which is present in the accumulator tends to collect in the upper part of the tubular element 28, which is farther away from the outlet fitting 34. Figures 7 and 8 show two possible orientations of the tubular element 28 in which, the outlet fitting is arranged in correspondence with the distributor and, respectively, in correspondence with the end of the - tubular element opposite to the distributor 26.

The fact that the accumulator is inclined towards the outlet prevents flow instabilities and guaranties that the cooling fluid at the exit of the condenser is in a liquid state. Preferably, the inclination of the accumulator 28 with respect to the horizontal is comprised between 2° and 10°.

## Claims

1. A condenser for an air conditioning system for a vehicle, comprising:
- a substantially rectangularly shaped heat exchanger core (22) with tubes and fins,
- a pair of distributors (24, 26) parallel to each other and arranged on two opposite sides of the heat exchanger core (22), the distributors having an inlet fitting and outlet fitting (34), and
- an accumulator/expansion tank (28) integrally formed with one of said distributors (26), the accumulator/expansion tank having a closed end and an open end placed in fluid communication with a distributor (26), the accumulator/expansion tank (28) extending along one of the sides of the heat exchanger core (22) substantially orthogonal to the distributors (24, 26),
**characterized in that** the accumulator/expansion tank (28) is inclined with respect to the respective side of the heat exchanger core (22) and **in that** said outlet fitting (34) of the condenser (14.) is arranged in correspondence with the lower zone of the accumulator (28).

2. A condenser according to claim 1, **characterized in that** the accumulator/expansion tank and the respective distributor (26) are formed by a single tubular element with closed ends and bent substantially at 90°.

3. A condenser according to claim 1, **characterized in that** the accumulator/expansion tank and the respective distributor (26) are formed by two different tubular elements permanently fixed to each other by welding or by means of a coupling element (38).

4. A condenser according to claim 1, **characterized in that** the accumulator/expansion tank (28) forms an angle with respect to the heat exchanger core, comprised between about 2° and 10°.

## Patentansprüche

1. Kondensator für eine Klimaanlage eines Fahrzeugs, umfassend:
- einen im wesentlichen rechteckig geformten Wärmetauscherkern (22) mit Rohren und Rippen;
- ein Paar Verteiler (24, 26), die parallel zueinander und auf zwei gegenüberliegenden Seiten des Wärmetauscherkerns (22) angeordnet sind, wobei die Verteiler einen Einlaßanschluß und einen Auslaßanschluß (34) aufweisen; und
- einen Speicher/Expansionstank (28), der einstückig mit einem der Verteiler (26) ausgebildet ist, wobei der Speicher/Expansionstank ein geschlossenes Ende und ein offenes Ende aufweist, das in Fluidverbindung mit einem Verteiler (26) angeordnet ist, und der Speicher/Expansionstank (28) sich entlang einer der Seiten des Wärmetauscherkerns (22) im wesentlichen orthogonal zu den Verteilern (24, 26) erstreckt,
**dadurch gekennzeichnet, daß**
der Speicher/Expansionstank (28) bezüglich der betreffenden Seite des Wärmetauscherkerns (22) geneigt ist und daß der Auslaßanschluß (34) des Kondensators (14) in Übereinstimmung mit der unteren Zone des Speichers (28) angeordnet ist.

2. Kondensator gemäß Anspruch 1, **dadurch gekennzeichnet, daß** der Speicher/Expansionstank und der betreffende Verteiler (26) durch ein einziges rohrförmiges Element mit geschlossenen Enden und im wesentlichen um 90° gekröpft gebildet sind.

3. Kondensator gemäß Anspruch 1, **dadurch gekennzeichnet, daß** der Speicher/Expansionstank und der betreffende Verteiler (26) durch zwei unterschiedliche rohrförmige Elemente gebildet sind, die durch Schweißen oder mittels eines Kopplungsglieds (38) dauerhaft aneinander befestigt sind.

4. Kondensator gemäß Anspruch 1, **dadurch gekennzeichnet, daß** der Speicher/Expansionstank (28) bezüglich des Wärmetauscherkerns einen Winkel bildet, der zwischen etwa 2° und 10° umfaßt.

## Revendications

1. Condenseur pour un système de conditionnement d'air pour un véhicule, comportant :
- un noyau d'échangeur de chaleur (22) sensiblement rectangulaire avec des tubes et des ailettes,
- une paire de distributeurs (24, 26) parallèles l'un à l'autre et disposés sur deux côtés opposés du noyau d'échangeur de chaleur (22), les distributeurs ayant un raccord d'entrée et un raccord de sortie (34), et
- un accumulateur/réservoir d'expansion (28) formé intégralement avec un desdits distributeurs (26), l'accumulateur/réservoir d'expansion ayant une extrémité fermée et une extrémité ouverte placées en communication de fluide avec un distributeur (26), l'accumulateur/réservoir d'expansion (28) s'étendant le long d'un des côtés du noyau d'échangeur de chaleur (22) sensiblement perpendiculairement aux distributeurs (24, 26),
**caractérisé en ce que** l'accumulateur/réservoir d'expansion (28) est incliné par rapport au côté respectif du noyau d'échangeur de chaleur (22) et **en ce que** ledit raccord de sortie (34) du condenseur (14) est disposé en correspondance avec la zone inférieure de l'accumulateur (28).

2. Condenseur selon la revendication 1, **caractérisé en ce que** l'accumulateur/réservoir d'expansion et le distributeur (26) respectif sont formés par un unique élément tubulaire avec des extrémités fermées et plié sensiblement à 90°.

3. Condenseur selon la revendication 1, **caractérisé en ce que** l'accumulateur/réservoir d'expansion et le distributeur (26) respectif sont formés par deux éléments tubulaires différents fixés de façon permanente l'un à l'autre par soudage ou au moyen d'un élément d'accouplement (38).

4. Condenseur selon la revendication 1, **caractérisé en ce que** l'accumulateur/réservoir d'expansion (28) forme un angle par rapport au noyau d'échangeur de chaleur, compris entre environ 2° et 10°.
